# EUROPEAN PATENT APPLICATION

(11) **EP 4 503 505 A1**
(43) Date of publication of application: **05.02.2025**
(21) Application number: 22932747.3
(22) Date of filing: 25.03.2022
(51) Int. Cl.: H04L 9/32, H04L 61/503, G06F 21/33

(54) **SECURITY IMPLEMENTATION METHOD AND APPARATUS, AND TERMINAL DEVICE, NETWORK ELEMENT AND CERTIFICATE GENERATION DEVICE**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN); LIU, Xuefeng, Dongguan, Guangdong 523860 (CN); ZOU, Jipeng, Dongguan, Guangdong 523860 (CN)
(74) Representative: RGTH
(86) International application number: PCT/CN2022/083164
(87) International publication number: WO 2023/178686

(57) **Abstract**

Embodiments of the present application provide a security implementation method, apparatus, terminal device, network element, and credential generating device, and the method includes: acquiring, by a terminal device, an authorization credential of a first network element, where the authorization credential is used by the terminal device to verify whether a transmission of sensing data is authorized, and the authorization credential comprises a first digital signature; and authorizing, by the terminal device, the transmission of the sensing data, in a case where the authorization credential is verified successfully based on the first digital signature.

## Description

### TECHNICAL FIELD

Embodiments of the present application relate to the field of a mobile communication technology, and specifically to a security implementation method, apparatus, terminal device, network element, and credential generating device.

### BACKGROUND

With the continuous development of the communication technology, an integrated communication and sensing technology that can implement the sensing of all things, the interconnection of all things, and the intelligence of all things, has become a focus of industry attention. The integrated communication and sensing technology refers to a technology that integrates two functions of communication and sensing. Herein, the communication is the information transmission between two or more points; the sensing is the detection of physical environment information, such as speed measurement, target positioning, etc. The integrated communication and sensing technology may enable future communication systems to have both communication and sensing functions, to sense physical features of the surrounding environment by actively recognizing and analyzing characteristics of channels while transmitting information on wireless channels, thereby enhancing communication and sensing functions. For example, the communication system may use a user device, a wearable device, a base station and other sensing devices to sense physical environment information, and digitize the physical environment information, to obtain sensing data (such as position data, temperature data, speed, human heart rate, blood pressure, etc.). In this way, a sensing server may provide a corresponding service, such as a positioning service, speed measurement service, health call service, etc., according to the sensing data transmitted by the sensing device.

However, the sensing data is usually personal data or sensitive data, and there is currently no clear solution to ensure that the sensing data is not leaked or stolen.

### SUMMARY

The embodiments of the present application provide a security implementation method, apparatus, terminal device, network element, and credential generating device.

The embodiments of the present application provide a security implementation method, including:
acquiring, by a terminal device, an authorization credential of a first network element, where the authorization credential is used by the terminal device to verify whether a transmission of sensing data is authorized, and the authorization credential includes a first digital signature; and
authorizing, by the terminal device, the transmission of the sensing data, in a case where the authorization credential is verified successfully based on the first digital signature.

The embodiments of the present application further provide a security implementation method, including:
transmitting, by a first network element, first request information to a terminal device, where the first request information is used to request the terminal device to authorize to transmit sensing data, the first request information includes an authorization credential of the first network element, the authorization credential is used by the terminal device to verify whether a transmission of the sensing data is authorized, and the authorization credential is verified by a first digital signature included in the authorization credential.

The embodiments of the present application further provide another security implementation method, including:
receiving, by a credential distributing device, fourth request information transmitted by a first network element, where the fourth request information is used to request an authorization credential of the first network element, the authorization credential is used by a terminal device to verify whether a transmission of sensing data is authorized;
generating, by the credential distributing device, the authorization credential of the first network element.

The embodiments of the present application provide a security implementation apparatus, applied to a terminal device, including:
a first acquisition unit, configured to acquire an authorization credential of a first network element, where the authorization credential is used by the terminal device to verify whether a transmission of sensing data is authorized, and the authorization credential includes a first digital signature; and
an authorization unit, configured to authorize the transmission of the sensing data, in a case where the authorization credential is verified successfully based on the first digital signature.

The embodiments of the present application further provide a security implementation apparatus, applied to a first network element, including:
a second transmitting unit, configured to transmit first request information to a terminal device, where the first request information is used to request the terminal device to authorize to transmit sensing data, the first request information includes an authorization credential of the first network element, the authorization credential is used by the terminal device to verify whether a transmission of the sensing data is authorized, and the authorization credential is verified by a first digital signature included in the authorization credential.

The embodiments of the present application further provide a security implementation apparatus, applied to a credential distributing device, including:
a third receiving unit, configured to receive fourth request information transmitted by a first network element, where the fourth request information is used to request an authorization credential of the first network element, the authorization credential is used by a terminal device to verify whether a transmission of sensing data is authorized; and
a credential generating unit, configured to the authorization credential of the first network element.

The terminal device provided in the embodiments of the present application includes a processor and a memory. The memory is configured to store a computer program, and the processor is configured to invoke and execute the computer program stored in the memory, to perform the above-mentioned security implementation method.

The first network element provided in the embodiments of the present application includes a processor and a memory. The memory is configured to store a computer program, and the processor is configured to invoke and execute the computer program stored in the memory, to perform the above-mentioned security implementation method.

The credential generating device provided in the embodiments of the present application includes a processor and a memory. The memory is configured to store a computer program, and the processor is configured to invoke and execute the computer program stored in the memory, to perform the above-mentioned security implementation method.

A chip provided in the embodiments of the present application is configured to implement the above-mentioned security implementation method.

Specifically, the chip includes: a processor, configured to invoke and execute a computer program from a memory, to cause a device equipped with the chip to perform the above-mentioned security implementation method.

A computer-readable storage medium provided in the embodiments of the present application, is configured to store a computer program, and the computer program causes a computer to perform the above-mentioned security implementation method.

A computer program product provided in the embodiments of the present application, includes computer program instructions, and the computer program instructions cause a computer to perform the above-mentioned security implementation method.

A computer program provided in the embodiments of the present application, when being executed on a computer, causes the computer to perform the above-mentioned security implementation method.

In the security implementation method provided in the embodiments of the present application, the terminal device may verify the authorization credential of the network element at the network side. In a case where the verification is successful, the terminal device may authorize the transmission of sensing data. That is, the authorization direction is changed from the network side authorizing the terminal side in the related technology, to the terminal side authorizing the network side, thereby ensuring that the sensing data is not leaked or stolen.

### BRIEF DESCRIPTION OF THE DRAWINGS

Drawings illustrated herein are used to provide further understanding of the present application and constitute a part of the present application. The schematic embodiments of the present application and descriptions thereof are used to explain the present application and do not constitute improper limitations on the present application. In the drawings:
FIG. 1 is a schematic diagram of a network architecture of an exemplary communication system, provided in the embodiments of the present application;
FIG. 2 is a schematic flow chart 1 of a security implementation method, provided in the embodiments of the present application;
FIG. 3 is a schematic flow chart 2 of a security implementation method, provided in the embodiments of the present application;
FIG. 4 is a schematic flow chart 3 of a security implementation method, provided in the embodiments of the present application;
FIG. 5 is a schematic flow chart 4 of a security implementation method, provided in the embodiments of the present application;
FIG. 6 is a schematic flow chart of a security implementation method in an application scenario 1, provided in the embodiments of the present application;
FIG. 7 is a schematic flow chart of a security implementation method in an application scenario 2, provided in the embodiments of the present application;
FIG. 8 is a schematic flow chart of a security implementation method in an application scenario 3, provided in the embodiments of the present application;
FIG. 9 is a schematic flow chart of a security implementation method in an application scenario 4, provided in the embodiments of the present application;
FIG. 10 is a schematic diagram of a structural composition of a security implementation apparatus 1000, provided in the embodiments of the present application;
FIG. 11 is a schematic diagram of a structural composition of a security implementation apparatus 1100, provided in the embodiments of the present application;
FIG. 12 is a schematic diagram of a structural composition of a security implementation apparatus 1200, provided in the embodiments of the present application;
FIG. 13 is a schematic structural diagram of a communication device, provided in the embodiments of the present application;
FIG. 14 is a schematic structural diagram of a chip of the embodiments of the present application; and
FIG. 15 is a schematic block diagram of a communication system, provided in the embodiments of the present application.

### DETAILED DESCRIPTION

Technical solutions in the embodiments of the present application will be described below with reference to the drawings in the embodiments of the present application. Obviously, the described embodiments are a part of the embodiments of the present application, but not all of the embodiments of the present application. All other embodiments obtained based on the embodiments in the present application by the ordinary skilled in the art without paying any creative effort, shall belong to the protection scope of the present application.

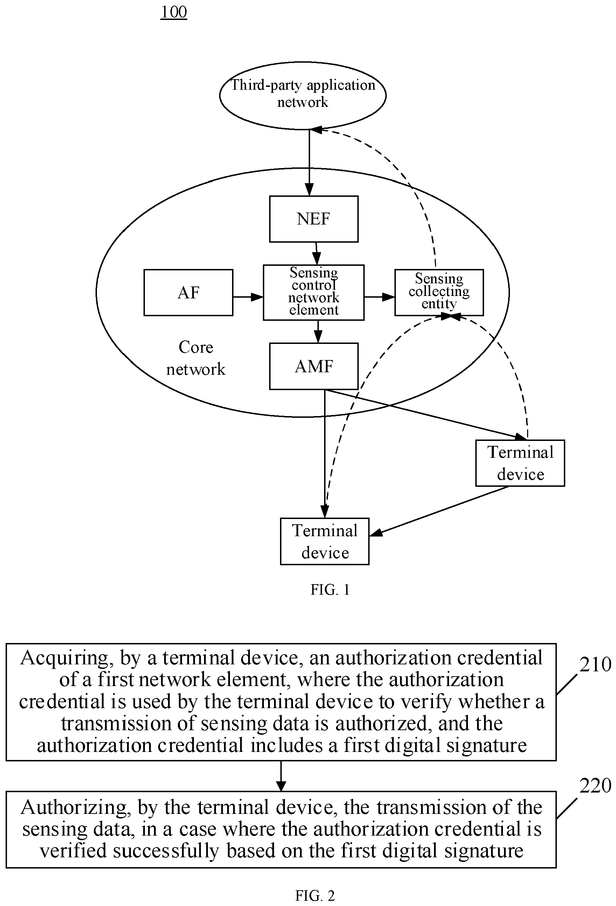

To facilitate understanding, a network architecture to which the security implementation method provided in the embodiments of the present application may be applied is first introduced in conjunction with the relevant drawings. FIG. 1 is a schematic diagram of a network architecture of a communication system, provided in the embodiments of the present application. As shown in FIG. 1, the communication system 100 may include a terminal device, an access network device, a core network, and a third-party application network. The terminal device accesses the core network via the access network device. A multi-service transmission is supported between the terminal device and the network device.

It should be understood that the embodiments of the present application are only exemplified by the communication system 100, but the embodiments of the present application are not limited thereto. That is to say, the technical solutions of the embodiments of the present application may be applied to various communication systems, such as: a Long Term Evolution (LTE) system, an LTE Time Division Duplex (TDD), a Universal Mobile Telecommunication System (UMTS), an Internet of Things (IoT) system, a Narrow Band Internet of Things (NB-IoT) system, an enhanced Machine-Type Communications (eMTC) system, a fifth-generation communication system (i.e., 5G communication system, also referred to as New Radio (NR) communication system), a sixth-generation communication system (6G), or a future communication system, etc.

In the communication system 100 shown in FIG. 1, the access network device may provide a communication coverage for a specific geographical area, and may communicate with terminal devices located in the coverage area.

The access network device may be an evolutional base station (Evolutional Node B, eNB or eNodeB) in a Long Term Evolution (LTE) system, or a base station (gNB) in an NR system, or a 6G base station, or a Next Generation Radio Access Network (NG RAN) device, or a radio controller in a Cloud Radio Access Network (CRAN), or the network device 120 may be a relay station, an access point, a vehicle-mounted device, a wearable device, a hub, a switch, a network bridge, a router, or a network device in a future evolved Public Land Mobile Network (PLMN), etc.

The terminal device may be any terminal device, including but not limited to a terminal device connected to the network device or other terminal devices by a wire or wireless connection.

For example, the terminal device may refer to an access terminal, a user equipment (UE), a user unit, a user station, a mobile station, a mobile platform, a remote station, a remote terminal, a mobile device, a user terminal, a terminal, a wireless communication device, a user agent, or a user apparatus, etc. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device or other processing devices connected to a wireless modem, a vehicle-mounted device, a wearable device, a drone, an unmanned vehicle, a robot, a terminal device in a 5G network, a terminal device in a 6G network, or a terminal device in a future evolved network, etc.

The terminal device may also be used for device to device (D2D) communication.

The core network may be used as a carrier network, which can provide an interface to the external third-party application network, provide the terminal device with a communication connection, authentication, management, policy control, and carrying for data services. The core network may be a 5G core network (5G Core, 5GC), or may also be an LTE's packet core evolved network (Evolved Packet Core, EPC), which is not limited to the embodiments of the present application.

As shown in FIG. 1, the core network may include the following network elements: an Access and Mobility Management Function (AMF) network element, an Authentication Server Function (AUSF) network element, an Application Function (AF) network element, a Network Exposure Function (NEF) network element, a sensing control network element, and a sensing collection network element. The core network 130 may also include other network elements not shown in FIG. 1, such as a user plane function (UPF) network element, a session management function (SMF) network element, a unified data manager (UDM) network element, a network application function (NAF) network element, etc.

Herein, the AMF is a control plane network element provided by an operator, responsible for the access control and mobility management of terminal devices accessing the operator's network, and the AMF, as a terminated point of non-access stratum signalings, processes network signalings. The AUSF is also a control plane network element provided by the operator, and is used for authentication of terminal devices. The AF is used to store service security requirements and provide information for a policy decision. The NEF is used to expose functions and events to other systems, to provide exposure while ensuring system security. The sensing control network element may be a control plane network element provided by the operator, which is mainly used to manage and control sensing services. The sensing collecting entity may be a user plane network element, which is used to collect sensing data transmitted by different devices and manage the sensing data.

It should be noted that solid arrows in FIG. 1 represent transmission directions of control messages, and dotted arrows represent transmission directions of IP routing data.

It should be understood that during the network evolution process, the network elements in the above-mentioned core network may also be called other names, or form new network entities by dividing functions of the core network, which are not limited to the embodiments of the present application. Herein, the above-mentioned network elements may be deployed individually, or two or more network elements thereof may be integrated and deployed in one entity. For example, the sensing control network element and the sensing collecting entity may be deployed in one entity, or the sensing control network element and the sensing collecting entity may be deployed in different entities respectively, which is not limited to the embodiments of the present application.

It should be noted that FIG. 1 illustrates, by way of example only, the system for which the present application is applicable. Of course, the methods shown in the embodiments of the present application may also be applicable for other systems. In addition, the terms "system" and "network" herein are often used interchangeably herein. The term "and/or" herein is merely to describe the association relationship of associated objects, indicating that three relationships may exist, for example, A and/or B may mean three cases in which: A exists alone, A and B both exist, and B exists alone. In addition, the character "/" herein generally means that associated objects before and after "/" are in an "or" relationship. It should also be understood that the "indication" mentioned in the embodiments of the present application may be a direct indication, an indirect indication, or may also represent having an associated relationship. For example, A indicates B, which may mean that A directly indicates B, for example, B may be acquired by A; may also mean that A indirectly indicates B, for example, A indicates C, and B may be acquired by C; may also mean that there is an associated relationship between A and B. It should also be understood that the "corresponding" mentioned in the embodiments of the present application may indicate a direct or indirect correspondence between the two, or an association relationship between the two, or a relationship of indicating and being indicated, or configuring and being configured, etc. It should also be understood that the "predefined" or "predefined rule" mentioned in the embodiments of the present application may be implemented by pre-saving corresponding codes, tables or other modes that may be used to indicate relevant information in a device (for example, including the terminal device and the network device), and the present application does not limit its specific implementation. For example, the "predefined" may refer to "defined in a protocol". It should also be understood that in the embodiments of the present application, the "protocol" may refer to a standard protocol in the communication field, for example, it may include an LTE protocol, an NR protocol, and related protocols applied in future communication systems, which are not limited to the present application.

To facilitate the understanding of the technical solutions of the embodiments of the present application, the relevant technologies of the embodiments of the present application are illustrated below. The following related technologies, as optional schemes, may be arbitrarily combined with the technical solutions of the embodiments of the present application, which all belong to the protection scope of the embodiments of the present application.

Integrated communication and sensing: refers to a new type of information processing technology that implements the coordination of both sensing and communication functions based on the sharing of software and hardware resources or the sharing of information, which may effectively improve system spectrum efficiency, hardware efficiency and information processing efficiency.

Having both communication and sensing functions will be an ability trend of base stations and terminal devices in the future communication system. The future terminal device will be upgraded to an intelligent entity, and abilities of unmanned vehicle, drone, robot and other intelligent device systems will continue to be enhanced. In a close distance, the intelligent entity needs to identify people's postures, movements and expressions, to enhance the performance of human-machine interfaces, and needs to identify action states between multiple intelligent entities, to improve the coordinated performance of intelligent entities. For a microscopic distance, it needs to identify a target attribute inside a human body, a product, and an object, to provide remote, artificial intelligence-based, and unmanned physical examination, quality examination, and security examination services.

Due to differences in system functions and specifications between a communication system and a sensing system, the communication system and the sensing system have great differences in metric requirements, such as bandwidth, power output capability, receiving detection sensitivity, system dynamic range, duplex ability and performance, as well as frequency offset, phase noise, nonlinearity of radio frequency channels, etc. Therefore, in the traditional hardware architecture, hardware designs are carried out according to needs of communication and sensing respectively. However, the integrated communication and sensing technology hopes that the architecture and hardware system can implement the sensing and communication functions simultaneously. Therefore, the system needs to balance the communication and sensing requirements at the beginning of design, and newly add characteristic requirements such as shared spectrum resources, high dynamic range, full-duplex and self-interference elimination, high channel performance, etc, and additionally, it is also necessary to balance the goals of low implementation complexity, low power consumption, and high integration. Exemplarily, communication and sensing of the terminal device with the integrated communication and sensing share the newly added spectrum resources.

At present, the authorization mechanism in the 5G security technology usually refers to the service network authorizing the terminal device to access, allowing the terminal device to use resources of the network, and the home network authorizing the service network to provide services for the terminal device. Specifically, during the registration process of the terminal device, the 5GC performs identity authentication and access authorization based on a subscription profile in the UDM. It can be understood that the service network should authorize the terminal device by the subscription profile of the terminal device obtained from the home network. Herein, the authorization of the terminal device is based on the authenticated Subscription Permanent Identifier (SUPI). It can be understood that the current security technology can better meet the access authentication issues of the terminal device in the 5G security technology, and define some key generation functions and procedures.

In the integrated communication and sensing scenario in the future communication technology, the sensing data is usually personal data or sensitive data, which needs to protect the sensing data from being leaked and stolen. However, the current security technology only authorizes network resources, and is to authorize the terminal side from the network side, but does not meet the authorization of the sensing data, and does not meet the requirement for authorization of the network side by the terminal side or the access side.

In order to improve network security, an embodiment of the present application provides a security implementation method, as shown in FIG. 2, and the method includes but is not limited to the following steps.

Step 210: acquiring, by a terminal device, an authorization credential of a first network element, where the authorization credential is used by the terminal device to verify whether a transmission of sensing data is authorized, and the authorization credential includes a first digital signature.

Step 220: authorizing, by the terminal device, the transmission of the sensing data, in a case where the authorization credential is verified successfully based on the first digital signature.

Herein, the terminal device may be a device that supports the integrated communication and sensing technology, and the terminal device may obtain the sensing data by detecting physical environment information. The sensing data may be location data, altitude data, temperature data, speed, human heart rate, respiratory rate, blood pressure, etc. The sensing data may come from a sensing signal acquired by using the sensing technology, which is not limited to the embodiments of the present application. The terminal device in the embodiments of the present application may be understood as a provider of the sensing data.

In addition, the first network element may be a core network element (such as a base station), an access network element (such as a sensing control network element), a network element (such as a sensing server) in the third-party application network, etc., which is not limited to the embodiments of the present application. Herein, the sensing server may be an application server that provides a sensing service (such as positioning, speed measurement, and health call service).

In practical applications, since the sensing data belongs to personal data or sensitive data, the terminal device needs to verify a receiver of the sensing data or a requester of the sensing data, to determine legitimacy of its identity and whether it has access to the sensing data, thereby preventing the sensing data from being leaked or stolen by an attacker.

In the embodiments of the present application, the terminal device may verify whether it authorizes to transmit the sensing data to the network element at the network side by the authorization credential of the first network element. Herein, the authorization credential of the first network element may include the first digital signature, and the terminal device may use the first digital signature to verify the authorization credential, to determine whether the network element at the network side has access to the sensing data of the terminal device.

To sum up, in the security implementation method provided in the embodiments of the present application, the terminal device may verify the authorization credential of the network element at the network side. If the verification passes, the terminal device may authorize the transmission of the sensing data. That is to say, the authorization direction is changed from the network side authorizing the terminal side in the related technology to the terminal side authorizing the network side, thereby ensuring that the sensing data is not leaked or stolen.

Optionally, the first digital signature may be a signature of a credential distributing device, that is to say, the first digital signature may be obtained by signing other information in the authorization credential by using a private key of the credential distributing device. It should be understood that the credential distributing device is a device that generates the authorization credential of the first network element.

Optionally, the authorization credential may further include at least one of the following information:
service identification information;
identification information of a credential distributing device;
a public key of the credential distributing device;
identification information of the first network element;
a public key of the first network element;
an RSA accumulator parameter corresponding to the first network element; or
data identification information.

Herein, the service identification information may be used to indicate a service type of the sensing data to be authorized. The service type may include a positioning service, a speed measurement service, a health call service, an environmental monitoring service, etc., which is not limited to the embodiments of the present application.

Optionally, the service identification information may be bit data with a fixed length, where different bit data correspond to different service types. The terminal device determines the service type corresponding to the bit data by looking up a table.

Optionally, the service identification information may be identification information of a sensing server that provides the sensing service. Generally speaking, the sensing server may provide one or more sensing services, so the required sensing service types are different. Based on this, in the embodiments of the present application, the service type of the sensing data to be authorized may be represented by the identification information of the sensing server.

The RSA accumulator parameter corresponding to the first network element is used to verify whether the authorization credential of the first network element is revoked. It should be understood that in actual applications, there is a case where the authorization credential is revoked. Therefore, the RSA parameter of the authorization credential needs to be carried in the authorization credential, so that the terminal device verifies whether the authorization credential is revoked.

In addition, the data identification information may be used to indicate a data type of the sensing data. The sensing data may come from a sensing signal acquired by using the sensing technology. The data type includes one or more types. Exemplarily, if the sensing service is the health call service, then the data type may include heart rate data, body temperature data, amount of exercise data, blood pressure data, respiratory rate data, etc. If the sensing service is the environmental monitoring service, the data type may include location data, wind speed data, temperature data, solarization data, altitude data, etc. The data type is not limited to the embodiments of the present application.

It should be noted that the credential distributing device may generate the authorization credential for the first network element, based on the request of the first network element. The credential distributing device may be an application provider certificate authority (CA), or a sensing server, or an operator CA, which is not limited to the embodiments of the present application. In addition, related contents of the first network element requesting the credential distributing device to generate the authorization credential are detailed as below, which will not be repeated here for the sake of brevity.

Optionally, the first digital signature may be obtained by signing all or part of the above-mentioned information by using a private key of the credential distributing device. Correspondingly, a process of the terminal device verifying the authorization credential based on the first digital signature may be implemented by the following steps:
Step 230: verifying, by the terminal device, the first digital signature by using a public key of the credential distributing device, to obtain first verification information;
Step 240: determining that the authorization credential is verified successfully, if the first verification information is consistent with other information in the authorization credential except the first digital signature.

It can be understood that, since the first digital signature is obtained by signing by using the private key of the credential distributing device, the terminal device may verify the first digital signature by using the public key of the credential distributing device, to obtain the first verification information. Only when the first verification information is consistent with other information in the authorization credential, the terminal device authorizes to transmit the sensing data to the network element at the network side, otherwise, the terminal device does not perform further processing.

It should be noted that the terminal device may acquire the public key of the credential distributing device from the authorization credential, to verify the first digital signature. The terminal device may also pre-store the public key of the credential distributing device, and use the pre-stored public key to verify the first digital signature. The source of the public key of the credential distributing device is not limited to the embodiments of the present application.

Optionally, in some embodiments, if the authorization credential includes service identification information and/or data identification information, before verifying the authorization credential, the terminal device needs to determine whether the terminal device supports the service type indicated by the service identification information and/or the data type indicated by the data identification information in the authorization credential.

Herein, the service identification information carried in the authorization credential may be used to represent the service type of the sensing data that the network element at the network side needs to acquire. The data identification information carried in the authorization credential may be used to represent the data type of the sensing data required by the network element at the network side. Therefore, after the terminal device acquires the authorization credential of the first network element, the terminal device needs to first determine whether it supports the service type and/or the data type required by the network side.

Optionally, the terminal device may maintain a service identification information list, the list may store service identification information corresponding to all service types supported by the terminal device. In this way, after acquiring the authorization credential of the first network element, the terminal device may compare the service identification information in the authorization credential with the contents in the above-mentioned list, to determine whether the terminal device supports the service type indicated by the service identification information carried in the authorization credential.

Optionally, the terminal device may also maintain a data identification information list, the list may store data identification information corresponding to data types supported by the terminal device. After acquiring the authorization credential of the first network element, the terminal device may compare the data identification information in the authorization credential with the contents in the list, to determine whether the terminal device supports the data type indicated by the data identification information in the authorization credential.

Exemplarily, in a scenario where the authorization credential only includes service identification information, if the terminal device supports the service type indicated by the service identification information, the terminal device may verify the authorization credential based on the first digital signature. Otherwise, the terminal device ignores the authorization credential and does not perform further processing.

In a scenario where the authorization credential only includes data identification information, if the terminal device supports the data type indicated by the data identification information, the terminal device may verify the authorization credential based on the first digital signature. Otherwise, the terminal device ignores the authorization credential and does not perform further processing.

In a scenario where the authorization credential includes service identification information and data identification information, only when the terminal device supports the service type indicated by the service identification information and the terminal device supports the data type indicated by the data identification information, the terminal device verifies the authorization credential based on the first digital signature. On the contrary, when the terminal device does not support the service type indicated by the service identification information, or the terminal device does not support the data type indicated by the data identification information, the terminal device ignores the authorization credential and does not perform further processing.

In the embodiments of the present application, after the terminal device authorizes the transmission of the sensing data, the terminal device may transmit the sensing data corresponding to the service type indicated by the service identification information and/or the data type. That is to say, the service type of the sensing data transmitted by the terminal device is the service type indicated by the service identification information in the authorization credential, and the data type is the data type indicated by the data identification information in the authorization credential. In this way, it may be ensured that the sensing data transmitted by the terminal device matches the sensing data required by the first network element, thereby improving transmission efficiency.

Optionally, in some embodiments, when the authorization credential includes the RSA accumulator parameter corresponding to the first network element, in Step 220, authorizing, by the terminal device, the transmission of the sensing data, in the case where the authorization credential is verified successfully based on the first digital signature, may further be implemented by:
in a case where the authorization credential is verified successfully based on the first digital signature, verifying, by the terminal device, whether the authorization credential of the first network element is revoked, based on the RSA accumulator parameter; and
if the authorization credential is not revoked, authorizing, by the terminal device, the transmission of the sensing data.

It can be understood that after the authorization credential is verified successfully, the terminal device may also verify whether the authorization credential is revoked according to the RSA accumulator parameter. If the authorization credential of the first network element is not revoked, the terminal device authorizes to transmit the sensing data. If the authorization credential of the first network element is revoked, the terminal device determines that the first network element does not have access to the sensing data. In this way, the efficiency of the terminal device authorizing the sensing data may be improved.

In the embodiments of the present application, there are multiple ways for the terminal device to acquire the authorization credential of the first network element, two of which are detailed as below.

### Way 1

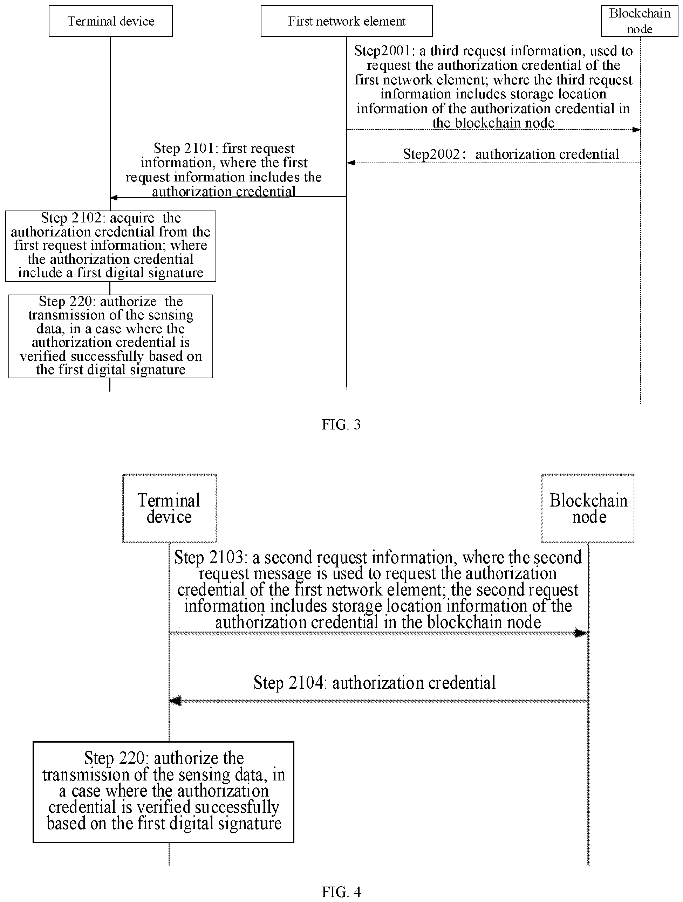

In an embodiment of the present application, referring to FIG. 3, acquiring, by the terminal device, the authorization credential of the first network element in Step 210, may be implemented by the following steps:
Step 2101: receiving, by the terminal device, first request information transmitted by the first network element, where the first request information is used to request the terminal device to authorize to transmit the sensing data; the first request information includes the authorization credential;
Step 2102: acquiring, by the terminal device, the authorization credential from the first request information.

Herein, when the first network element needs the terminal device to transmit the sensing data to the first network element, the first network element may transmit the first request information to the terminal device, to trigger a sensing service request. Here, the first network element may carry the authorization credential of the first network element in the first request information. In this way, after receiving the first request information, the terminal device may acquire the authorization credential of the first network element from the first request information, and verify the authorization credential based on the first digital signature in the authorization credential, to determine whether to authorize the transmission of the sensing data.

Optionally, in some embodiments, the first network element locally stores its authorization credential. When the first network element triggers the sensing service request, the first network element may transmit the locally stored authorization credential to the terminal device via the first request information.

Optionally, in some embodiments, the authorization credential may not be stored locally in the first network element, but may be distributedly stored in a blockchain node by a decentralized identity (DID) method. When the first network element needs to transmit the sensing service request, the first network element may first acquire the authorization credential of the first network element from a storage block of the blockchain node. Herein, referring to the flow chart shown in FIG. 3 (dotted lines in FIG. 3 represent optional steps), before the first network element transmits the first request information to the terminal device, the following steps may also be performed:
Step 2001: transmitting, by the first network element, a third request information to a blockchain node; where the third request information is used to request the authorization credential of the first network element; the third request information includes storage location information of the authorization credential in the blockchain node;
Step 2002: receiving, by the first network element, the authorization credential of the first network element transmitted by the blockchain node.

That is to say, before the first network element needs to trigger the sensing service request, the first network element may request the blockchain node for acquiring the authorization credential of the first network element, according to the storage location information of the authorization credential of the first network element. After receiving the authorization credential fed back by the blockchain node, the first network element may carry the acquired authorization credential in the first request information and transmit it to the terminal device, so that the terminal device authorizes the transmission of the sensing data.

Optionally, since the authorization credential includes the first digital signature of the credential distributing device, based on this, after the first network element receives the authorization credential transmitted by the blockchain node, the first network element may use the public key of the credential distributing device to verify the first digital signature, to determine the authenticity of the authorization credential. After verifying the first digital signature successfully, the first network element carries the authorization credential in the first request information and transmits it to the terminal device.

It should be understood that the authorization credential of the first network element may be generated in advance by the credential distributing device. Here, after the credential distributing device generates the authorization credential, the authorization credential may be transmitted back to the first network element, or the authorization credential may be uploaded to the blockchain node for distributed storage. Furthermore, when the first network element needs to acquire the sensing data, the first network element may acquire the authorization credential from the local storage space, or request the authorization credential from the blockchain node, and transmit the acquired authorization credential to the terminal device via the first request information. In this way, the flexibility of the terminal device authorizing the sensing data is improved.

Optionally, after receiving the first request information, the terminal device may first verify an identity of the first network element that transmits the first request information, to determine whether the first network element is a trusted network element and determine whether the first request information is tampered with. Only when the verification of the identity of the first network element passes, the terminal device acquires the authorization credential based on the first request information and verifies the authorization credential, so as to ensure that the sensing data is not leaked or stolen during the subsequent transmission.

Optionally, the terminal device may use a shared key between the terminal device and the first network element to verify the identity of the first network element, or the terminal device may also use a public key of the first network element to verify the identity of the first network element, which is not limited to the embodiments of the present application.

Optionally, the first request information may include at least one of the following information:
identification information of the first network element;
identification information of the terminal device;
a channel parameter, where the channel parameter is used to establish a trusted channel between the first network element and the terminal device;
a public key of the first network element; or
a second digital signature, where the second digital signature is obtained by signing other information in the first request information by a private key of the first network element.

It should be understood that when the second digital signature is included in the first request information, the terminal device may use the second digital signature to verify the identity of the first network element. Herein, a method for the terminal device verifying the identity of the first network element, includes:
verifying, by the terminal device, the second digital signature by using a public key of the first network element, to obtain second verification information; and if the second verification information is consistent with other information in the first request information except the second digital signature, determining, by the terminal device, that the identity of the first network element is verified successfully.

Optionally, the terminal device may maintain a public key list, identification information of multiple network elements and a public key corresponding to each network element are stored in the list. After the terminal device receives the first request information transmitted by the first network element, the terminal device mat look up a public key corresponding to the identification information of the first network element from the above-mentioned public key list. Then, the terminal device verifies the second digital signature based on the public key, to obtain the second verification information.

Optionally, if the first request information includes the public key of the first network element, the terminal device may also verify the second digital signature based on the public key carried in the first request information, to obtain the second verification information. The identity verification method of the first network element is not limited to the embodiments of the present application.

It should be understood that when the second verification information is consistent with other information in the first request information except the second digital signature, the terminal device confirms that the first network element is a trusted network element and the first request information is not tampered with. When the second verification information is not consistent with other information in the first request information except the second digital signature, the terminal device may consider that the first network element is an untrusted network element and/or that the first request information is tampered with by a third party. In this case, the terminal device may ignore the first request information and not perform further processing.

To sum up, in the security implementation method provided in the embodiments of the present application, the network element at the network side may request the terminal device to authorize the transmission of the sensing data, and the terminal device may verify the identity of the network element at the network side and its access, after receiving the request from the network element at the network element side. Moreover, after the verification passes, the terminal device may authorize the transmission of the sensing data, to ensure that the sensing data is not leaked or stolen.

### Way 2:

In an embodiment of the present application, referring to the flow chart shown in FIG. 4, acquiring, by the terminal device, the authorization credential of the first network element in Step 210, may be implemented by the following steps:
Step 2103: transmitting, by the terminal device, a second request information to a blockchain node, where the second request information is used to request the authorization credential of the first network element; the authorization credential is stored in a block of the blockchain node; the second request information includes storage location information of the authorization credential in the blockchain node;
Step 2104: receiving, by the terminal device, the authorization credential transmitted by the blockchain node.

It should be understood that the authorization credential of the first network element may be distributedly stored in a block of the blockchain node by the decentralized identity (DID) method. The terminal device actively requests the authorization credential of the first network element from the blockchain node. Specifically, the terminal device may request the blockchain node for acquiring the authorization credential of the first network element, according to the storage location information of the authorization credential of the first network element.

It should be noted that the storage location information of the authorization credential of the first network element may be acquired by the terminal device from an access network element (such as a base station) or a core network element, which is not limited to the embodiments of the present application.

Optionally, the terminal device actively requesting the blockchain node for the authorization credential of the first network element, for verification and authorization, may be triggered by an interactive instruction received on a user interface, or triggered by an application program of the terminal device, or triggered actively after acquiring the sensing data, which is not limited to the embodiments of the present application.

Optionally, in the embodiments of the present application, the terminal device may be triggered to periodically upload the sensing data. The periodic uploading of the sensing data may be actively initiated by the terminal device, or may be triggered by user interface interaction, or triggered by an application program of the terminal device, etc., which is not limited to the embodiments of the present application.

Based on this, after the terminal device is triggered to periodically upload the sensing data, it may actively request the authorization credential of the first network element from the blockchain node, and after verifying the requested authorization credential successfully, the terminal device transmits the sensing data according to a preset time period. Of course, the terminal device may also first actively request the authorization credential of the first network element from the blockchain node, and then be triggered to periodically upload the sensing data, and the present application does not limit the order of the two steps.

It can be seen that in the security implementation method provided in the embodiments of the present application, the terminal device may actively acquire the authorization credential of the network element at the network side and perform the verification. If the verification passes, the terminal device may authorize the transmission of the sensing data, to ensure that the sensing data is not leaked or stolen. In addition, for distributed verification and authorization close to the terminal device, that is, the same type of service in different geographical locations, it may authorize the sensing data in parallel, which improves the efficiency of authorizing the sensing data.

The following describes in detail the process of generating the authorization credential.

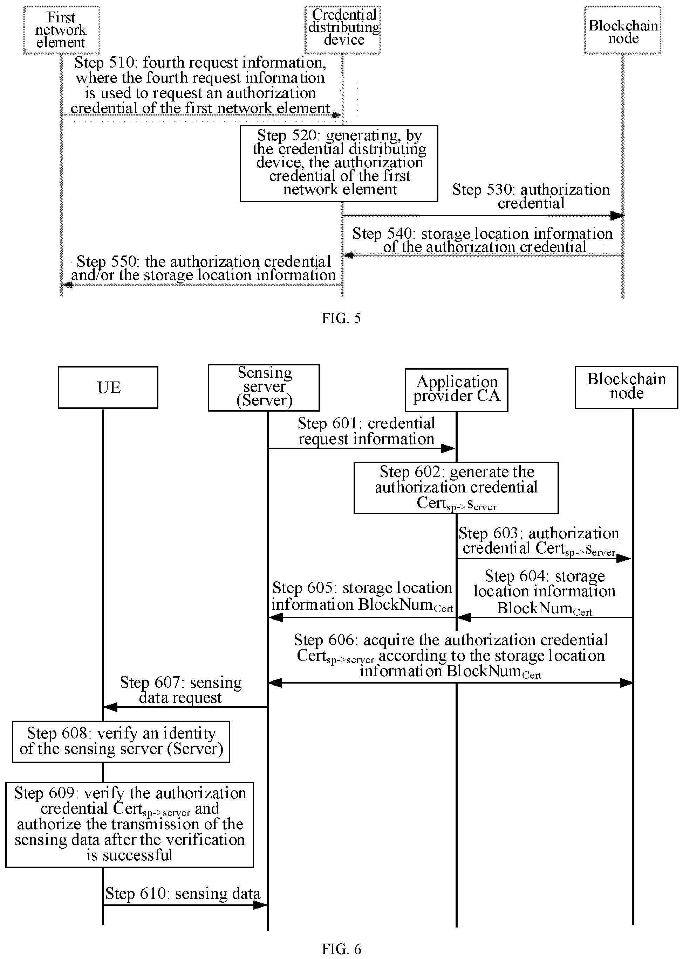

In an embodiment of the present application, referring to the flow chart shown in FIG. 5, the security implementation method provided in the embodiments of the present application may include the following steps:
Step 510: receiving, by a credential distributing device, fourth request information transmitted by a first network element, where the fourth request information is used to request an authorization credential of the first network element, the authorization credential is used by a terminal device to verify whether a transmission of sensing data is authorized.
Step 520: generating, by the credential distributing device, the authorization credential of the first network element.

Herein, the credential distributing device may be an application provider CA, a sensing server, or an operator CA, which is not limited to the embodiments of the present application.

It can be understood that the first network element, before determining to collect the sensing data, may initiate a credential request to the credential distributing device. Specifically, the first network element may transmit the fourth request information to the credential distributing device through a secure channel, to request the credential distributing device to generate the authorization credential of the first network element, so that the terminal device may perform verification according to the authorization credential.

Optionally, after receiving the fourth request information, the credential distributing device may first verify an identity of the first network element that transmits the fourth request information, to determine whether the first network element is a trusted network element, and determine whether the fourth request information is tampered with. Only when the verification of the identity of the first network element passes, the credential distributing device may generate the authorization credential for the first network element.

Optionally, the fourth request information may include at least one of the following information:
service identification information;
identification information of the first network element;
a public key of the first network element;
data identification information;
a third digital signature, where the third digital signature is obtained by signing other information in the fourth request information by a private key of the first network element.

It should be understood that when the third digital signature is included in the fourth request information, the credential distributing device may use the third digital signature to verify the identity of the first network element. Herein, the method of the credential distributing device verifying the identity of the first network element includes:
verifying, by the credential distributing device, the third digital signature by using a public key of the first network element, to obtain third verification information; if the third verification information is consistent with other information in the fourth request information except the third digital signature, determining, by the credential distributing device, that the identity of the first network element is verified successfully.

Optionally, the credential distributing device may maintain a public key list, identification information of multiple network elements and a public key corresponding to each network element are stored in the list. After receiving the fourth request information transmitted by the first network element, the credential distributing device may look up a public key corresponding to the identification information of the first network element from the above-mentioned public key list. Then, the credential distributing device verifies the third digital signature based on the public key, to obtain the third verification information.

Optionally, if the fourth request information includes the public key of the first network element, the credential distributing device may also verify the third digital signature based on the public key carried in the fourth request information, to obtain the third verification information. The embodiments of the present application do not limit the identity verification method of the first network element.

It should be understood that when the third verification information is consistent with other information in the fourth request information except the third digital signature, the credential distributing device confirms that the first network element is a trusted network element and the fourth request information is not tampered with. When the third verification information is not consistent with other information in the fourth request information except the third digital signature, the credential distributing device may consider that the first network element is an untrusted network element and/or that the fourth request information is tampered with by a third party. In this case, the credential distributing device may ignore the fourth request information and not perform further processing.

Optionally, before the credential distributing device generates the authorization credential of the first network element, an RSA accumulator parameter α may be generated for the first network element. The RSA accumulator parameter α of the first network element may be used to prove whether the authorization credential of the first network element is revoked.

Optionally, the authorization credential generated by the credential distributing device may include at least one of the following information:
service identification information;
identification information of the credential distributing device;
a public key of the credential distributing device;
identification information of the first network element;
a public key of the first network element;
an RSA accumulator parameter corresponding to the first network element;
data identification information;
a first digital signature.

Herein, the first digital signature may be obtained by the credential distributing device signing other information in the authorization credential mentioned above by using its own private key.

Optionally, referring to the flow chart shown in FIG. 5, in the embodiments of the present application, the credential distributing device may further perform Step 530 and Step 540 after generating the authorization credential of the first network element.

Step 530: transmitting, by the credential distributing device, the authorization credential of the first network element to the blockchain node.

Step 540: receiving, by the credential distributing device, storage location information of the authorization credential transmitted by the blockchain node.

It can be understood that the credential distributing device may transmit the generated authorization credential of the first network element to the blockchain node, to perform an upload-to-chain operation on the authorization credential of the first network element, thereby implementing the distributed storage of the authorization credential. Furthermore, after receiving the authorization credential, the blockchain node may store the authorization credential in a storage block of the blockchain, and feed back the storage location information to the credential distributing device.

Optionally, referring to FIG. 5, the following step after Step 540 may be further included:
Step 550: transmitting, by the credential distributing device, the authorization credential and/or the storage location information to the first network element.

It can be understood that after generating the authorization credential, the credential distributing device may transmit the generated authorization credential to the requester, i.e., the first network element. The credential distributing device may also transmit the storage location information of the authorization credential in the storage block to the first network element, and the first network element may request the authorization credential from the blockchain node according to the storage location information when necessary.

To sum up, in the security implementation method provided in the embodiments of the present application, the credential generating device may generate the authorization credential for the first network element according to the request of the first network element, and perform distributed storage on the authorization credential. In this way, the first network element or the terminal device may request the authorization credential from the blockchain node, for distributed verification. That is to say, for the same type of service in different geographical locations, it may authorize the sensing data in parallel, thereby improving the efficiency of authorizing the sensing data.

The following describes the embodiments of the present application in conjunction with specific application scenarios.

### Application scenario 1

In the application scenario 1, the first network element may be a sensing server (Server), and the credential distributing device may be an application provider CA. Referring to the flow chart shown in FIG. 6, the security implementation method provided in the embodiments of the present application may be implemented by the following steps:
Step 601: the sensing server (Server) transmits a credential request information to the application provider CA.

In this embodiment, the credential request information is used to request the authorization credential of the sensing server (Server). The credential request information may include at least one of IDₛₑᵣᵥₑᵣ, pkₛₑᵣᵥₑᵣ, ID_{SP}, Typeₛₑᵣᵥₑᵣ, and Sigₛₑᵣᵥₑᵣ.

Herein, IDₛₑᵣᵥₑᵣ is identification information of the sensing server (Server), pkₛₑᵣᵥₑᵣ is a public key of the sensing server (Server), ID_{SP} is service identification information, Typeₛₑᵣᵥₑᵣ is data identification information, and Sigₛₑᵣᵥₑᵣ is a digital signature of the sensing server (Server). Sigₛₑᵣᵥₑᵣ is obtained by signing one or more of IDₛₑᵣᵥₑᵣ, pkₛₑᵣᵥₑᵣ, ID_{SP}, and Typeₛₑᵣᵥₑᵣ by the sensing server (Server) using its own private key.

Step 602: the application provider CA generates the authorization credential for the sensing server (Server).

Optionally, the application provider CA may verify an identity of the sensing server (Server) that transmits the request information.

Specifically, the application provider CA may maintain a public key list, the list is used to store all server IDs using the service type corresponding to the ID_{SP} and the corresponding public keys. The application provider CA may check whether the IDₛₑᵣᵥₑᵣ in the credential request information is in the public key list, and if the IDₛₑᵣᵥₑᵣ is in the public key list, it acquires the public key corresponding to the IDₛₑᵣᵥₑᵣ.

Furthermore, the application provider CA uses the public key corresponding to IDₛₑᵣᵥₑᵣ to verify Sigₛₑᵣᵥₑᵣ in the credential request information. If the verification result is consistent with other information in the credential request information, it is determined that the identity verification of the sensing server (Server) passes.

It should be noted that the embodiments of the present application do not limit the method of acquiring the public key list.

In this embodiment, the application provider CA may generate the authorization credential of the sensing server (Server) based on the content in the credential request information. The authorization credential may be represented by Cert_{sp->}sₑᵣᵥₑᵣ.

Specifically, Cert_{sp->}sₑᵣᵥₑᵣ may include at least one of IDₛₑᵣᵥₑᵣ, pkₛₑᵣᵥₑᵣ, ID_{SP}, Typeₛₑᵣᵥₑᵣ, pk_{SP}, αₛₑᵣᵥₑᵣ, and Sig_{sp->server}. Herein, pk_{SP} is a public key of the application provider CA, αₛₑᵣᵥₑᵣ is an RSA accumulator parameter generated by the application provider CA for the sensing server (Server), and Sig_{sp->server} is obtained by signing one or more of IDₛₑᵣᵥₑᵣ, pkₛₑᵣᵥₑᵣ, ID_{SP}, Typeₛₑᵣᵥₑᵣ, pk_{SP}, and αₛₑᵣᵥₑᵣ by the application provider CA using its own private key.

Step 603: the application provider CA transmits the authorization credential Cert_{sp->server} to the blockchain node.

Step 604: the application provider CA receives the storage location information BlockNum_{Cert} transmitted by the blockchain node.

Step 605: The application provider CA transmits the storage location information BlockNum_{Cert} of the authorization credential to the sensing server (Server).

Optionally, the application provider CA may also transmit the authorization credential Cert_{sp->server} directly to the sensing server (Server).

Step 606, the sensing server (Server) acquires the authorization credential Cert_{sp->server} from the blockchain node according to the storage location information BlockNum_{Cert}.

Optionally, the sensing server (Server) may verify the authenticity of the acquired authorization credential by the public key pk_{SP} of the application provider CA. Specifically, the sensing server (Server) uses the pk_{SP} to verify the Sig_{sp->server} in the authorization credential Cert_{sp->server}. If the verification result is consistent with other information in the authorization credential Cert_{sp->server}, it is determined that the authorization credential is an authentic credential.

Step 607: the sensing server transmits a sensing data request to the UE.

In this embodiment, the sensing data request may include at least one of IDₛₑᵣᵥₑᵣ, ID_{UE}, pkₛₑᵣᵥₑᵣ, g, Cert_{sp->server}, Sigₛₑᵣᵥₑᵣ'. Herein, ID_{UE} is identification information of the UE, and g is a channel parameter, which is used to establish a trusted channel between the sensing server (Server) and the UE. Sigₛₑᵣᵥₑᵣ' is obtained by signing one or more of IDₛₑᵣᵥₑᵣ, ID_{UE}, pkₛₑᵣᵥₑᵣ, g, Cert_{sp->server} by the sensing server (Server) using its own private key.

Step 608: the UE verifies an identity of the sensing server (Server).

Specifically, the UE may maintain a public key list, and identification information of multiple sensing servers and a public key corresponding to each sensing server are stored in the list. After receiving the sensing data request transmitted by the sensing server (Server), the UE may look up the public key pkₛₑᵣᵥₑᵣ corresponding to IDₛₑᵣᵥₑᵣ from the above-mentioned public key list. Then, the UE verifies Sigₛₑᵣᵥₑᵣ' based on pkₛₑᵣᵥₑᵣ. If the verification result obtained by the UE verifying Sigₛₑᵣᵥₑᵣ' based on pkₛₑᵣᵥₑᵣ is consistent with other information in the sensing data request, it is determined that the sensing server (Server) is a trusted device. Otherwise, the UE determines that the verification fails and does not perform further processing.

Step 609: after the UE verifies the identity of the sensing server (Server) successfully, the UE verifies Cert_{sp->server} and authorizes the transmission of the sensing data after the verification is successful.

In this embodiment, after the UE verifies the identity of the sensing server (Server) successfully, the UE further verifies Cert_{sp->server}. Specifically, the UE uses the public key pk_{SP} of the credential distributing device to verify the digital signature Sig_{sp->server} in Cert_{sp->server}. If the verification result is consistent with other information in Cert_{sp->server}, it is determined that the sensing server (Server) has access to the UE's sensing data. If the verification result is not consistent with other information in Cert_{sp->server}, no further processing is performed.

Optionally, if Cert_{sp->server} includes an RSA accumulator parameter αₛₑᵣᵥₑᵣ of the sensing server (Server), the terminal device may use αₛₑᵣᵥₑᵣ to verify whether the Cert_{sp->server} is revoked. If the Cert_{sp->server} is revoked, no further processing is performed. If the Cert_{sp->server} is not revoked, the UE may continue to perform Step 610.

Step 610: the UE transmits the sensing data to the sensing server (Server).

It should be noted that in the application scenario 1, Step 601 to Step 605 may be implemented separately, Step 606 to Step 610 may also be implemented separately, and Step 601 to Step 610 may be implemented together, which are not limited to the embodiments of the present application.

### Application scenario 2

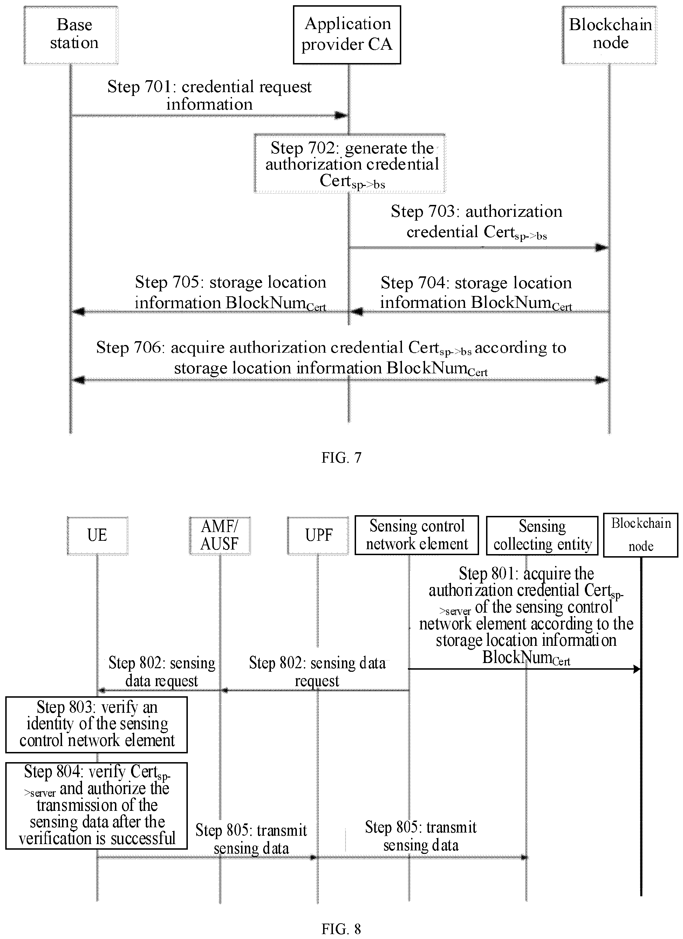

In the application scenario 2, the first network element may be a base station, and the credential distributing device may be an application provider CA. The credential distributing device may distribute the authorization credential to the base station separately. Referring to the flow chart shown in FIG. 7, the process of the application provider CA distributing the authorization credential to the base station may be implemented by the following steps:

Step 701: the base station transmits credential request information to the application provider CA.

In this embodiment, the credential request information is used to request the authorization credential of the base station. The credential request information may include at least one of ID_{bs}, pk_{bs}, ID_{SP}, Type_{bs}, and Sig_{bs}.

Herein, ID_{bs} is identification information of the base station, pk_{bs} is a public key of the base station, ID_{SP} is service identification information, Type_{bs} is data identification information, and Sig_{bs} is a digital signature of the base station. Sig_{bs} is obtained by signing one or more of ID_{bs}, pk_{bs}, ID_{SP}, Type_{bs} by the base station using its own private key.

Step 702: the application provider CA generates the authorization credential for the base station.

Optionally, the application provider CA may verify an identity of the base station that transmits the request information.

Specifically, the application provider CA may maintain a public key list, and the list is used to store all base station IDs using the service type corresponding to the ID_{SP} and the corresponding public keys. The application provider CA may check whether the ID_{bs} in the credential request information is in the public key list, and if so, acquire the public key corresponding to the ID_{bs}.

Furthermore, the application provider CA uses the public key corresponding to the ID_{bs} to verify Sig_{bs} in the credential request information. If the verification result is consistent with other information in the credential request information, it is determined that the identity verification of the base station passes.

It should be noted that the embodiments of the present application do not limit the method of acquiring the public key list.

In this embodiment, the application provider CA may generate the authorization credential of the base station based on the content in the credential request information. The authorization credential may be represented by using Cert_{sp->bs}.

Specifically, Cert_{sp->bs} may include at least one of ID_{bs}, pk_{bs}, ID_{SP}, Type_{sbs}, pk_{SP}, α_{bs} and Sig_{sp->bs}. Herein, pk_{SP} is a public key of the application provider CA, α_{b}s is an RSA accumulator parameter generated by the application provider CA for the base station, and Sig_{sp->bs} is obtained by signing one or more of ID_{bs}, pk_{bs}, ID_{SP}, Type_{sbs}, pk_{SP}, α_{bs} by the application provider CA using its own private key.

Step 703: the application provider CA transmits the authorization credential Cert_{sp->bs} to the blockchain node.

Step 704: the application provider CA receives the storage location information BlockNum_{Cert} transmitted by the blockchain node.

Step 705: The application provider CA transmits the storage location information BlockNum_{Cert} of the authorization credential to the base station.

Optionally, the application provider CA may also transmit the authorization credential Certₛₚ₋>_{bs} directly to the base station.

It should be noted that the base station in the above embodiment may also be replaced by a sensing control network element.

### Application scenario 3

In the application scenario 3, the first network element may be a sensing control network element, and the credential distributing device may be an application provider CA. The sensing control network element may request the terminal device to authorize the transmission of the sensing data. Referring to the flow chart shown in FIG. 8, the method in which the sensing control network element requests the terminal device to authorize the transmission of the sensing data in the embodiments of the present application may be implemented by the following steps:
Step 801: the sensing control network element acquires the authorization credential Cert_{sp->server} of the sensing control network element from the blockchain node according to the storage location information BlockNum_{Cert}.

Optionally, the sensing control network element may verify the authenticity of the acquired authorization credential by the public key pk_{SP} of the application provider CA. Specifically, the sensing control network element may use pk_{SP} to verify Sig_{sp->server} in the authorization credential Cert_{sp->server}. If the verification result is consistent with other information in the authorization credential Cert_{sp->server}, it is determined that the authorization credential is an authentic certificate.

Step 802: the sensing control network element transmits a sensing data request to the UE.

In this embodiment, the sensing data request may include at least one of IDₛₑᵣᵥₑᵣ, ID_{UE}, pkₛₑᵣᵥₑᵣ, g, Cert_{sp->server}, Sigₛₑᵣᵥₑᵣ'. Herein, IDₛₑᵣᵥₑᵣ is identification information of the sensing control network element, ID_{UE} is identification information of the UE, pkₛₑᵣᵥₑᵣ may be a public key of the sensing control network element, and g is a channel parameter, used to establish a trusted channel between the sensing control network element and the UE. Sigₛₑᵣᵥₑᵣ' is obtained by signing one or more of IDₛₑᵣᵥₑᵣ, ID_{UE}, pkₛₑᵣᵥₑᵣ, g, Cert_{sp->server} by the sensing control network element using its own private key.

Optionally, the sensing control network element may directly transmit the sensing data request to the UE, or may forward the sensing data request to the UE via an AMF network element/AUSF network element, which is not limited to the embodiments of the present application.

Step 803: the UE verifies an identity of the sensing control network element.

Specifically, the UE may maintain a public key list, and identification information of multiple sensing servers and a public key corresponding to each sensing server are stored in the list. After receiving the sensing data request transmitted by the sensing control network element, the UE may look up the public key pkₛₑᵣᵥₑᵣ corresponding to IDₛₑᵣᵥₑᵣ from the above-mentioned public key list. Then, the UE verifies Sigₛₑᵣᵥₑᵣ' based on pkₛₑᵣᵥₑᵣ. If the verification result obtained by the UE verifying Sigₛₑᵣᵥₑᵣ' based on pkₛₑᵣᵥₑᵣ is consistent with other information in the sensing data request, it is determined that the sensing control network element is a trusted device. Otherwise, the UE determines that the verification fails and does not perform further processing.

Step 804: after the UE verifies the identity of the sensing control network element successfully, the UE verifies Cert_{sp->server} and authorizes the transmission of the sensing data after the verification is successful.

In this embodiment, after the UE verifies the identity of the sensing control network element successfully, the UE further verifies Cert_{sp->server}. Specifically, the UE uses the public key pk_{SP} of the credential distributing device to verify the digital signature Sig_{sp->server} in Cert_{sp->server}. If the verification result is consistent with other information in Cert_{sp->server}, it is determined that the sensing control network element has access to the UE's sensing data. If the verification result is not consistent with other information in Cert_{sp->server}, no further processing is performed.

Optionally, if Cert_{sp->server} includes an RSA accumulator parameter αₛₑᵣᵥₑᵣ of the sensing control network element, the UE may use αₛₑᵣᵥₑᵣ to verify whether the Cert_{sp->server} is revoked. If the Cert_{sp->server} is revoked, no further processing is performed. If the Cert_{sp->server} is not revoked, the UE may continue to perform Step 805.

Step 805: the UE transmits the sensing data to a sensing collecting entity.

Optionally, the UE may transmit the sensing data directly to the sensing collecting entity, or the UE may forward the sensing data to the sensing collecting entity via a UPF, which is not limited to the embodiments of the present application.

### Application scenario 4

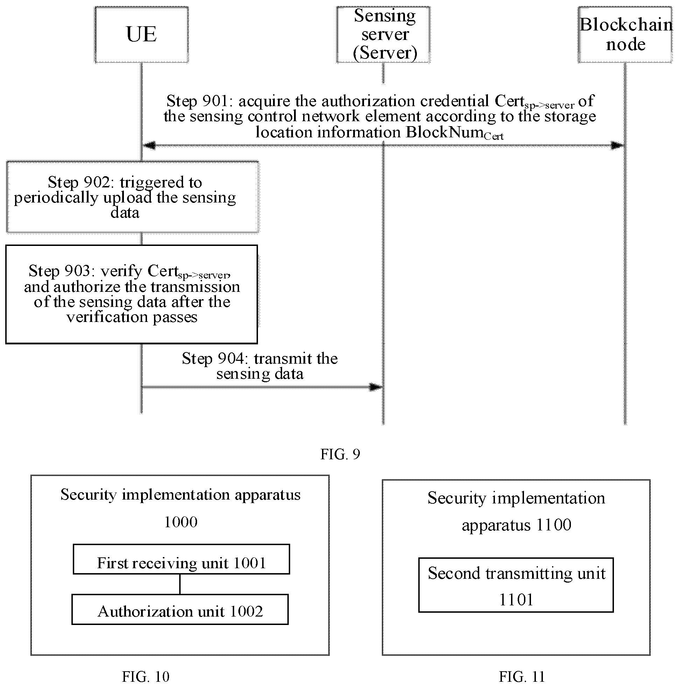

In the application scenario 4, the first network element may be a sensing server (Sever), and the credential distributing device may be an application provider CA. The terminal device may actively acquire the authorization credential of the sensing server (Sever) for verification. Referring to the flow chart shown in FIG. 9, the following steps may be included.

Step 901: the UE acquires the authorization credential Cert_{sp->server} of the sensing control network element from the blockchain node according to the storage location information BlockNum_{Cert}.

Optionally, the UE may verify the authenticity of the acquired authorization credential by the public key pk_{SP} of the application provider CA. Specifically, the UE may use pk_{SP} to verify Sig_{sp->server} in the authorization credential Cert_{sp->server}. If the verification result is consistent with other information in the authorization credential Cert_{sp->server}, it is determined that the authorization credential is an authentic credential.

Step 902: the UE is triggered to periodically upload the sensing data.

It should be noted that Step 901 may be performed before Step 902 or after Step 902, and the embodiments of the present application do not limit the performance order of the two steps.

Step 903: The UE verifies Cert_{sp->server}, and authorizes the transmission of the sensing data after the verification passes.

Specifically, the UE may use the public key pk_{SP} of the credential distributing device to verify the digital signature Sig_{sp->server} in Cert_{sp->server}. If the verification result is consistent with other information in Cert_{sp->server}, it is determined that the sensing control network element has access to the UE's sensing data. If the verification result is not consistent with other information in Cert_{sp->server}, no further processing is performed.

Optionally, if Cert_{sp->server} includes an RSA accumulator parameter αₛₑᵣᵥₑᵣ of the sensing control network element, the UE may use αₛₑᵣᵥₑᵣ to verify whether the Cert_{sp->server} is revoked, and if so, no further processing is performed. If the Cert_{sp->server} is not revoked, the UE may continue to perform Step 904.

Step 904: the UE transmits the sensing data to the sensing server.

Optionally, the above-mentioned sensing server may be replaced by a base station, and correspondingly, Cert_{sp->server} may be replaced by Cert_{sp->bs}.

The preferred implementations of the present application are described in detail above in conjunction with the accompanying drawings; however, the present application is not limited to the specific details in the above-mentioned implementations. Within the technical concept scope of the present application, a variety of simple modifications may be made to the technical solutions of the present application, and these simple modifications all fall within the protection scope of the present application. For example, the various specific technical features described in the above specific implementations may be combined in any suitable manner without contradiction, and in order to avoid unnecessary repetition, the present application will not further explain various possible combinations. For another example, the various different implementations of the present application may be arbitrarily combined, as long as they do not violate the concept of the present application, they should also be regarded as the contents disclosed in the present application. For another example, under the premise of no conflict, the various embodiments and/or the technical features in the various embodiments described in the present application may be arbitrarily combined with the prior art, and the technical solutions obtained after the combination should also fall within the protection scope of the present application.

It should also be understood that in the various method embodiments of the present application, the numerical sizes of the sequence numbers of the above-mentioned processes do not mean the order of execution. The execution order of each process should be determined by its function and internal logic, and should not constitute any limitation on the implementation process of the embodiments of the present application. In addition, in the embodiments of the present application, the term "and/or" is merely to describe an association relationship between associated objects, and indicates that three types of relationships may exist. Specifically, A and/or B may represent three cases of: only A, both A and B, or only B. In addition, the character "/" herein generally indicates that associated objects before and after "/" are in an "or" relationship.

FIG. 10 is a schematic diagram of a structural composition of a security implementation apparatus 1000 provided in the embodiments of the present application, which is applied to a terminal device. As shown in FIG. 10, the security implementation apparatus 1000 includes:
a first receiving unit 1001, configured to acquire an authorization credential of a first network element, where the authorization credential is used by the terminal device to verify whether a transmission of sensing data is authorized, and the authorization credential includes a first digital signature;
an authorization unit 1002, configured to authorize the transmission of the sensing data, in a case where the authorization credential is verified successfully based on the first digital signature.

Optionally, the authorization credential further includes at least one of the following:
service identification information;
identification information of a credential distributing device;
a public key of the credential distributing device;
identification information of the first network element;
a public key of the first network element;
an RSA accumulator parameter corresponding to the first network element; or
data identification information.

Optionally, the first digital signature is signed by a private key of a credential distributing device; the security implementation apparatus 1000 also includes a first verifying unit, configured to verify the first digital signature by using a public key of the credential distributing device, to obtain first verification information; determine that the authorization credential is verified successfully, if the first verification information is consistent with other information in the authorization credential except the first digital signature.

Optionally, the authorization credential further includes an RSA accumulator parameter corresponding to the first network element.

The authorization unit 1002 is also configured to: in a case where the authorization credential is verified successfully by using the public key of the credential distributing device, verify, by the terminal device, whether the authorization credential of the first network element is revoked, based on the RSA accumulator parameter; and if the authorization credential is not revoked, authorize, by the terminal device, the transmission of the sensing data.

Optionally, the authorization credential also includes service identification information; the service identification information is used to indicate a service type of the sensing data to be authorized; the first verifying unit is also configured to verify the authorization credential based on the first digital signature in a case where the terminal device supports the service type.

Optionally, the security implementation apparatus 1000 further includes a first transmitting unit, configured to transmit the sensing data corresponding to the sensing service type.

Optionally, the first receiving unit 1001 is also configured to receive first request information transmitted by the first network element, where the first request information is used to request the terminal device to authorize to transmit the sensing data; the first request information includes the authorization credential; and acquire the authorization credential from the first request information.

Optionally, the first receiving unit 1001 is further configured to acquire the authorization credential from the first request information in a case where an identity of the first network element is verified successfully.

Optionally, the first request information also includes a second digital signature signed by a private key of the first network element; the first verifying unit is also configured to verify the second digital signature by using a public key of the first network element, to obtain second verification information; and if the second verification information is consistent with other information in the authorization credential of the first request information except the second digital signature, determine that the identity of the first network element is verified successfully.

Optionally, the first transmitting unit is configured to transmit a second request information to a blockchain node, where the second request information is used to request the authorization credential of the first network element; the authorization credential is stored in a block of the blockchain node; the second request information includes storage location information of the authorization credential in the blockchain node.

Optionally, the first transmitting unit is also configured to transmit the sensing data according to a preset time period.

FIG. 11 is a schematic diagram of a structural composition of a security implementation apparatus 1100, provided in the embodiments of the present application, which is applied to a first network element. As shown in FIG. 11, the security implementation apparatus 1100 includes:
a second transmitting unit 1101, configured to transmit first request information to a terminal device, where the first request information is used to request the terminal device to authorize to transmit sensing data, the first request information includes an authorization credential of the first network element, the authorization credential is used by the terminal device to verify whether a transmission of the sensing data is authorized, and the authorization credential is verified by a first digital signature included in the authorization credential.

Optionally, the first request information further includes at least one of:
identification information of the first network element;
identification information of the terminal device;
a channel parameter, where the channel parameter is used to establish a trusted channel between the first network element and the terminal device;
a public key of the first network element;
a second digital signature, where the second digital signature is used by the terminal device to verify an identity of the first network element, the second digital signature is obtained by signing other information in the first request information by a private key of the first network element.

Optionally, the second transmitting unit 1101 is further configured to transmit a third request information to a blockchain node; where the third request information is used to request the authorization credential of the first network element; the authorization credential is stored in a block of the blockchain node; the third request information includes storage location information of the authorization credential in the blockchain node.

The security implementation apparatus 1101 also includes a second receiving unit, configured to receive the authorization credential transmitted by the blockchain node.

Optionally, the second transmitting unit 1101 is further configured to transmit fourth request information to a credential distributing device; where the fourth request information is used to request the authorization credential of the first network element.

Optionally, the fourth request information includes at least one of:
service identification information;
identification information of the first network element;
a public key of the first network element;
data identification information;
third digital signature, where the third digital signature is obtained by signing other information in the fourth request information by a private key of the first network element.

Optionally, the second receiving unit is further configured to receive the authorization credential transmitted by the credential distributing device, and/or the storage location information of the authorization credential.

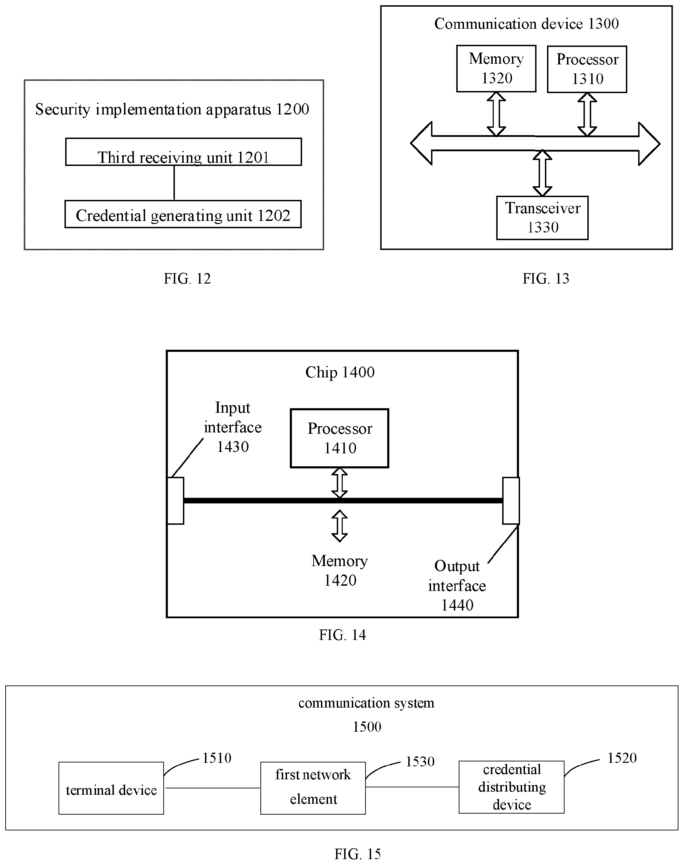

FIG. 12 is a schematic diagram of a structural composition of a security implementation apparatus 1200, provided in the embodiments of the present application, which is applied to a credential distributing device. As shown in FIG. 12, the security implementation apparatus 1200 includes:
a third receiving unit 1201, configured to receive fourth request information transmitted by a first network element, where the fourth request information is used to request an authorization credential of the first network element, the authorization credential is used by a terminal device to verify whether a transmission of sensing data is authorized;
a credential generating unit 1202, configured to generate the authorization credential of the first network element.

Optionally, the authorization credential includes at least one of:
service identification information;
identification information of the credential distributing device;
a public key of the credential distributing device;
identification information of the first network element;
a public key of the first network element;
an RSA accumulator parameter corresponding to the first network element;
data identification information;
a first digital signature.

Optionally, the credential generating unit 1202 is further configured to, in a case where an identity of the first network element is verified successfully, generate, by the credential distributing device, the authorization credential of the first network element.

Optionally, the fourth request information includes a third digital signature; the third digital signature is signed by a private key of the first network element.

Optionally, the security implementation apparatus 1200 also includes a second verifying unit, configured to verify the third digital signature based on a public key of the first network element, to obtain third verification information; and if the third verification information is consistent with other information in the fourth request information except the third digital signature, determine that the identity of the first network element is verified successfully.

Optionally, the security implementation apparatus 1200 further includes a third transmitting unit, configured to transmit the authorization credential to a blockchain node.

The third receiving unit 1201 is also configured to receive storage location information of the authorization credential transmitted by the blockchain node.

Optionally, the third transmitting unit is further configured to transmit the authorization credential and/or the storage location information to the first network element.

Those skilled in the art should understand that the relevant descriptions of the above-mentioned security implementation apparatus of the embodiments of the present application may be understood by referring to the relevant descriptions of the security implementation method of the embodiments of the present application.

FIG. 13 is a schematic structural diagram of a communication device 1300, provided in the embodiments of the present application. The communication device may be a terminal device, a first network element, or a credential distributing device. The communication device 1300 shown in FIG. 13 includes a processor 1310, and the processor 1310 may invoke and execute a computer program from a memory, to implement the method in the embodiments of the present application.

Optionally, as shown in FIG. 13, the communication device 1300 may further include a memory 1320. Herein, the processor 1310 may invoke and execute a computer program from the memory 1320, to implement the method in the embodiments of the present application.

Herein, the memory 1320 may be a separate device independent of the processor 1310, or may be integrated into the processor 1810.

Optionally, as shown in FIG. 13, the communication device 1300 may further include a transceiver 1330, and the processor 1310 may control the transceiver 1330 to communicate with other devices, specifically, to transmit information or data to other devices, or receive information or data transmitted by other devices.

Herein, the transceiver 1330 may include a transmitter and a receiver. The transceiver 1330 may further include antenna(s), and the number of the antenna(s) may be one or more.

Optionally, the communication device 1300 may specifically be the terminal device of the embodiments of the present application, and the communication device 1300 may implement the corresponding procedures implemented by the terminal device in various methods of the embodiments of the present application, which will not be repeated here for the sake of brevity.

Optionally, the communication device 1300 may specifically be the first network element of the embodiments of the present application, and the communication device 1300 may implement the corresponding procedures implemented by the first network element in various methods of the embodiments of the present application, which will not be repeated here for the sake of brevity.

Optionally, the communication device 1300 may specifically be the credential distributing device of the embodiments of the present application, and the communication device 1300 may implement the corresponding procedures implemented by the credential distributing device in various methods of the embodiments of the present application, which will not be repeated here for the sake of brevity.

FIG. 14 is a schematic structural diagram of a chip of the embodiments of the present application. The chip 1400 shown in FIG. 14 includes a processor 1410, and the processor 1410 may invoke and execute a computer program from a memory, to implement the method in the embodiments of the present application.

Optionally, as shown in FIG. 14, the chip 1400 may further include a memory 1420. Herein, the processor 1410 may invoke and execute a computer program from the memory 1420 to implement the method in the embodiments of the present application.

Herein, the memory 1420 may be a separate device independent from the processor 1410, or may also be integrated into the processor 1410.

Optionally, the chip 1400 may further include an input interface 1430. Herein, the processor 1410 may control the input interface 1430 to communicate with other devices or chips, and specifically, the input interface 1430 may acquire information or data sent by other devices or chips.

Optionally, the chip 1400 may further include an output interface 1440. Herein, the processor 1410 may control the output interface 1440 to communicate with other devices or chips, and specifically, the output interface 1440 may output information or data to other devices or chips.

Optionally, the chip may be applied to the terminal device in the embodiments of the present application, and the chip may implement the corresponding procedure implemented by the terminal device in the various methods of the embodiments of the present application, which will not be repeated here for the sake of brevity.

Optionally, the chip may be applied to the first network element in the embodiments of the present application, and the chip may implement the corresponding procedure implemented by the first network element in the various methods of the embodiments of the present application, which will not be repeated here for the sake of brevity.

Optionally, the chip may be applied to the credential distributing device in the embodiments of the present application, and the chip may implement the corresponding procedure implemented by the credential distributing device in the various methods of the embodiments of the present application, which will not be repeated here for the sake of brevity.

It should be understood that the chip mentioned in the embodiments of the present application may also be referred to as a system on chip, a system chip, a chip system or a system-on-chip chip, etc.

FIG. 15 is a schematic block diagram of a communication system, provided in the embodiments of the present application. As shown in FIG. 15, the communication system 1500 includes a terminal device 1510, a first network element 1520, and a credential distributing device 1530.

Herein, the terminal device 1510 may be used to implement the corresponding functions implemented by the terminal device in the above methods, the first network element 1520 may be used to implement the corresponding functions implemented by the first network element in the above methods, and the credential distributing device 1530 may be used to implement the corresponding functions implemented by the credential distributing device in the above methods, which will not be repeated here for the sake of brevity.

It should be understood that the processor in the embodiments of the present application may be an integrated circuit chip and have a processing capability of signals. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present application may be implemented or performed. A general-purpose processor may be a microprocessor, or the processor may also be any conventional processor, etc. The steps of the method disclosed in combination with the embodiments of the present application may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that, the memory in the embodiments of the present application may be a volatile memory or a non-volatile memory, or may include both volatile and non-volatile memories. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

It should be understood that the above memory is exemplary but not limiting illustration, e.g., the memory in embodiments of the present application may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present application is intended to include, but not limited to, these and any other suitable types of memories.

The embodiments of the present application further provide a computer readable storage medium for storing a computer program.

Optionally, the computer readable storage medium may be applied to the terminal device in the embodiments of the present application, and the computer program causes a computer to perform the corresponding procedure implemented by the terminal device in the various methods of the embodiments of the present application, which will not be repeated here for the sake of brevity.

Optionally, the computer readable storage medium may be applied to the first network element in the embodiments of the present application, and the computer program causes a computer to perform the corresponding procedure implemented by the first network element in the various methods of the embodiments of the present application, which will not be repeated here for the sake of brevity.

Optionally, the computer readable storage medium may be applied to the credential distributing device in the embodiments of the present application, and the computer program causes a computer to perform the corresponding procedure implemented by the credential distributing device in the various methods of the embodiments of the present application, which will not be repeated here for the sake of brevity.

The embodiments of the present application further provide a computer program product including computer program instructions.

Optionally, the computer program product may be applied to the terminal device in the embodiments of the present application, and the computer program instructions cause a computer to perform the corresponding procedure implemented by the terminal device in the various methods of the embodiments of the present application, which will not be repeated here for the sake of brevity.

Optionally, the computer program product may be applied to the first network element in the embodiments of the present application, and the computer program instructions cause a computer to perform the corresponding procedure implemented by the first network element in the various methods of the embodiments of the present application, which will not be repeated here for the sake of brevity.

Optionally, the computer program product may be applied to the credential distributing device in the embodiments of the present application, and the computer program instructions cause a computer to perform the corresponding procedure implemented by the credential distributing device in the various methods of the embodiments of the present application, which will not be repeated here for the sake of brevity.

The embodiments of the present application further provide a computer program.

Optionally, the computer program may be applied to the terminal device in the embodiments of the present application, the computer program when being executed on a computer, causes the computer to perform the corresponding procedure implemented by the terminal device in various methods of the embodiments of the present application, which will not be repeated here for the sake of brevity.

Optionally, the computer program may be applied to the first network element in the embodiments of the present application, the computer program when being executed on a computer, causes the computer to perform the corresponding procedure implemented by the first network element in various methods of the embodiments of the present application, which will not be repeated here for the sake of brevity.

Optionally, the computer program may be applied to the credential distributing device in the embodiments of the present application, the computer program when being executed on a computer, causes the computer to perform the corresponding procedure implemented by the credential distributing device in various methods of the embodiments of the present application, which will not be repeated here for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the application, it should be understood that the disclosed systems, apparatus, and method may be implemented in other ways. For example, the apparatus embodiments described above are only schematic, for example, division of the units is only the division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present application may be integrated into one processing unit, or the various units may exist physically separately, or two or more units may be integrated into one unit.

If the described functions are implemented in the form of a software functional unit and sold or used as an independent product, they may be stored in a computer readable storage medium. Based on this understanding, the technical solution of the present application essentially, or a part of the technical solution that contributes to the prior art, or a part of the technical solution, may be embodied in the form of a software product, and the computer software product is stored in a storage medium, and includes a plurality of instructions for enabling a computer device (which may be a personal computer, a server, or a network device, etc.) to perform all or some of steps of the methods described in the various embodiments of the present application. And, the storage medium mentioned above includes a USB flash drive (U disk), a mobile hard disk, a Read-Only Memory (ROM), a Random Access Memory (RAM), a diskette, or an optical disk, and various mediums that may store program codes.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

## Claims

1. A security implementation method, comprising:
acquiring, by a terminal device, an authorization credential of a first network element, wherein the authorization credential is used by the terminal device to verify whether a transmission of sensing data is authorized, and the authorization credential comprises a first digital signature; and
authorizing, by the terminal device, the transmission of the sensing data, in a case where the authorization credential is verified successfully based on the first digital signature.

2. The method according to claim 1, wherein the authorization credential further comprises at least one of:
service identification information;
identification information of a credential distributing device;
a public key of the credential distributing device;
identification information of the first network element;
a public key of the first network element;
an RSA accumulator parameter corresponding to the first network element; or
data identification information.

3. The method according to claim 1 or 2, wherein the first digital signature is signed by a private key of a credential distributing device; the method further comprises:
verifying, by the terminal device, the first digital signature by using a public key of the credential distributing device, to obtain first verification information;
determining, by the terminal device, that the authorization credential is verified successfully, if the first verification information is consistent with other information in the authorization credential except the first digital signature.

4. The method according to any one of claims 1 to 3, wherein the authorization credential further comprises an RSA accumulator parameter corresponding to the first network element;
authorizing, by the terminal device, the transmission of the sensing data, in the case where the authorization credential is verified successfully based on the first digital signature, comprises:
in a case where the authorization credential is verified successfully based on the first digital signature, verifying, by the terminal device, whether the authorization credential of the first network element is revoked, based on the RSA accumulator parameter; and
if the authorization credential is not revoked, authorizing, by the terminal device, the transmission of the sensing data.

5. The method according to any one of claims 1 to 4, wherein the authorization credential comprises service identification information and/or data identification information; the service identification information is used to indicate a service type of the sensing data to be authorized; the data identification information is used to indicate a data type of the sensing data;
the method further comprises:
in a case where the terminal device supports the service type and/or the data type, verifying, by the terminal device, the authorization credential based on the first digital signature.

6. The method according to claim 5, wherein after the terminal device authorizes the transmission of the sensing data, the method further comprises:
transmitting, by the terminal device, the sensing data corresponding to the sensing service type.

7. The method according to any one of claims 1 to 6, wherein acquiring, by the terminal device, the authorization credential of the first network element, comprises:
receiving, by the terminal device, first request information transmitted by the first network element, wherein the first request information is used to request the terminal device to authorize to transmit the sensing data; the first request information comprises the authorization credential; and
acquiring, by the terminal device, the authorization credential from the first request information.

8. The method according to claim 7, wherein the first request information further comprises at least one of:
identification information of the first network element;
identification information of the terminal device;
a channel parameter, wherein the channel parameter is used to establish a trusted channel between the first network element and the terminal device;
a public key of the first network element; or
a second digital signature, wherein the second digital signature is used by the terminal device to verify an identity of the first network element, the second digital signature is obtained by signing other information in the first request information by a private key of the first network element.

9. The method according to claim 7 or 8, wherein acquiring, by the terminal device, the authorization credential from the first request information, comprises:
in a case where an identity of the first network element is verified successfully, acquiring, by the terminal device, the authorization credential from the first request information.

10. The method according to claim 9, wherein the first request information further comprises a second digital signature signed by a private key of the first network element;
the method further comprises:
verifying, by the terminal device, the second digital signature by using a public key of the first network element, to obtain second verification information; and
if the second verification information is consistent with other information in the first request information except the second digital signature, determining that the identity of the first network element is verified successfully.

11. The method according to any one of claims 1 to 6, wherein acquiring, by the terminal device, the authorization credential, comprises:
transmitting, by the terminal device, a second request information to a blockchain node, wherein the second request information is used to request the authorization credential of the first network element; the authorization credential is stored in a block of the blockchain node; the second request information comprises storage location information of the authorization credential in the blockchain node;
receiving, by the terminal device, the authorization credential transmitted by the blockchain node.

12. The method according to claim 11, wherein the method further comprises:
transmitting, by the terminal device, the sensing data according to a preset time period.

13. A security implementation method, comprising:
transmitting, by a first network element, first request information to a terminal device, wherein the first request information is used to request the terminal device to authorize to transmit sensing data, the first request information comprises an authorization credential of the first network element, the authorization credential is used by the terminal device to verify whether a transmission of the sensing data is authorized, and the authorization credential is verified by a first digital signature comprised in the authorization credential.

14. The method according to claim 13, wherein the first request information further comprises at least one of:
identification information of the first network element;
identification information of the terminal device;
a channel parameter, wherein the channel parameter is used to establish a trusted channel between the first network element and the terminal device;
a public key of the first network element; or
a second digital signature, wherein the second digital signature is used by the terminal device to verify an identity of the first network element, the second digital signature is obtained by signing other information in the first request information by a private key of the first network element.

15. The method according to claim 13 or 14, wherein before the first network element transmits the first request information to the terminal device, the method further comprises:
transmitting, by the first network element, a third request information to a blockchain node; wherein the third request information is used to request the authorization credential of the first network element; the authorization credential is stored in a block of the blockchain node; the third request information comprises storage location information of the authorization credential in the blockchain node;
receiving, by the first network element, the authorization credential transmitted by the blockchain node.

16. The method according to claim 15, wherein before the first network element transmits the third request to the blockchain node, the method further comprises:
transmitting, by the first network element, fourth request information to a credential distributing device; wherein the fourth request information is used to request the authorization credential of the first network element.

17. The method according to claim 16, wherein the fourth request information comprises at least one of:
service identification information;
identification information of the first network element;
a public key of the first network element;
data identification information; or
third digital signature, wherein the third digital signature is obtained by signing other information in the fourth request information by a private key of the first network element.

18. The method according to claim 16 or 17, further comprising:
receiving, by the first network element, the authorization credential transmitted by the credential distributing device, and/or the storage location information of the authorization credential.

19. A security implementation method, comprising:
receiving, by a credential distributing device, fourth request information transmitted by a first network element, wherein the fourth request information is used to request an authorization credential of the first network element, the authorization credential is used by a terminal device to verify whether a transmission of sensing data is authorized;
generating, by the credential distributing device, the authorization credential of the first network element.

20. The method according to claim 19, wherein the authorization credential comprises at least one of:
service identification information;
identification information of the credential distributing device;
a public key of the credential distributing device;
identification information of the first network element;
a public key of the first network element;
an RSA accumulator parameter corresponding to the first network element;
data identification information; or
a first digital signature.

21. The method according to claim 19 or 20, further comprising:
in a case where an identity of the first network element is verified successfully, generating, by the credential distributing device, the authorization credential of the first network element.

22. The method according to claim 21, wherein the fourth request information comprises a third digital signature; the third digital signature is signed by a private key of the first network element; the method further comprises:
verifying, by the credential distributing device, the third digital signature based on a public key of the first network element, to obtain third verification information;
if the third verification information is consistent with other information in the fourth request information except the third digital signature, determining, by the credential distributing device, that the identity of the first network element is verified successfully.

23. The method according to any one of claims 19 to 22, further comprising:
transmiting, by the credential distributing device, the authorization credential to a blockchain node;
receiving, by the credential distributing device, storage location information of the authorization credential transmitted by the blockchain node.

24. The method according to claim 23, further comprising:
transmitting, by the credential distributing device, the authorization credential and/or the storage location information to the first network element.

25. A security implementation apparatus, applied to a terminal device, comprising:
a first acquisition unit, configured to acquire an authorization credential of a first network element, wherein the authorization credential is used by the terminal device to verify whether a transmission of sensing data is authorized, and the authorization credential comprises a first digital signature; and
an authorization unit, configured to authorize the transmission of the sensing data, in a case where the authorization credential is verified successfully based on the first digital signature.

26. A security implementation apparatus, applied to a first network element, comprising:
a second transmitting unit, configured to transmit first request information to a terminal device, wherein the first request information is used to request the terminal device to authorize to transmit sensing data, the first request information comprises an authorization credential of the first network element, the authorization credential is used by the terminal device to verify whether a transmission of the sensing data is authorized, and the authorization credential is verified by a first digital signature comprised in the authorization credential.

27. A security implementation apparatus, applied to a credential distributing device, comprising:
a third receiving unit, configured to receive fourth request information transmitted by a first network element, wherein the fourth request information is used to request an authorization credential of the first network element, the authorization credential is used by a terminal device to verify whether a transmission of sensing data is authorized; and
a credential generating unit, configured to the authorization credential of the first network element.

28. A terminal device, comprising a processor and a memory, wherein the memory is configured to store a computer program, the processor is configured to invoke and execute the computer program stored in the memory, to perform the method according to any one of claims 1 to 11.

29. A first network element, comprising a processor and a memory, wherein the memory is configured to store a computer program, the processor is configured to invoke and execute the computer program stored in the memory, to perform the method according to any one of claims 12 to 17.

30. A credential distributing device, comprising a processor and a memory, wherein the memory is configured to store a computer program, the processor is configured to invoke and execute the computer program stored in the memory, to perform the method according to any one of claims 18 to 24.

31. A chip, comprising a processor, wherein the processor is configured to invoke and execute a computer program from a memory, to cause a device equipped with the chip to perform the method according to any one of claims 1 to 12.

32. A chip, comprising a processor, wherein the processor is configured to invoke and execute a computer program from a memory, to cause a device equipped with the chip to perform the method according to any one of claims 13 to 18.

33. A chip, comprising a processor, wherein the processor is configured to invoke and execute a computer program from a memory, to cause a device equipped with the chip to perform the method according to any one of claims 19 to 24.

34. A computer-readable storage medium for storing a computer program, wherein the computer program causes a computer to perform the method according to any one of claims 1 to 12.

35. A computer-readable storage medium for storing a computer program, wherein the computer program causes a computer to perform the method according to any one of claims 13 to 18.

36. A computer-readable storage medium for storing a computer program, wherein the computer program causes a computer to perform the method according to any one of claims 19 to 24.

37. A computer program product, comprising computer program instructions, wherein the computer program instructions cause a computer to perform the method according to any one of claims 1 to 12.

38. A computer program product, comprising computer program instructions, wherein the computer program instructions cause a computer to perform the method according to any one of claims 13 to 18.

39. A computer program product, comprising computer program instructions, wherein the computer program instructions cause a computer to perform the method according to any one of claims 19 to 24.

40. A computer program, wherein the computer program causes a computer to perform the method according to any one of claims 1 to 12.

41. A computer program, wherein the computer program causes a computer to perform the method according to any one of claims 13 to 18.

42. A computer program, wherein the computer program causes a computer to perform the method according to any one of claims 19 to 24.
